# EUROPEAN PATENT SPECIFICATION

(11) **EP 1 277 391 B1**
(45) Date of publication and mention of the grant of the patent: **15.09.2004**
(21) Application number: 02023069.4
(22) Date of filing: 28.10.1999
(51) Int. Cl.: A01D 46/26

(54) **Tree shaking device for collecting fruits**
Baumschüttler zum Sammeln von Früchten
Dispositif pour secouer les arbres pour la collecte de fruits

(43) Date of publication of application: 22.01.2003
(62) Divisional of application: 99830681.5
(73) Proprietor: Active S.R.L., 26037 S.Giovanni in Croce (CR) (IT)
(72) Inventor: Griffini, Alberto, 26034 Pontirolo (CR) (IT); Buoli, Giorgio, 26040 Gussola (CR) (IT)
(74) Representative: Robba, Pierpaolo

(56) References cited:
- EP-A- 0 906 721
- EP-A- 0 933 015
- US-A- 3 457 713
- US-A- 4 873 820

## Description

The present invention relates to a tree shaking device for collecting fruits.

In particular, the invention is advantageously employed for harvesting fruits from trees such as olives, walnuts, hazelnuts and so on. Prior art devices of this type are for instance known from US-A-3 457 713 and US-A-4 873 820.

The devices of this type comprise a rod equipped at its end with a hook for engaging a branch of a tree, this rod being partially contained within a housing and receiving a reciprocating motion through an eccentric kinematic mechanism, which in turn transforms a rotatory motion of a motor into a reciprocating motion.

An eccentric arm, through a connecting rod, imparts a reciprocating motion to the rod carrying the hook with a stroke of about 60 mm. When the hook engages the single branches of a tree the rod transmits the reciprocating motion to the branches shaking them and causing the fruits to fall from the tree.

A drawback of these known shaking devices derives from **their lenght when not in use and** the remarkable oscillatory stresses transmitted to the user who bears and controls the device.

In fact, in use the hook is connected to the branch and the machine is driven in a reciprocating motion according to the direction of the rod with a displacement that can reach the maximum stroke generated by the eccentric.

There have been proposed tree shaking devices with particular improvements to make more comfortable the use of the machine, **particularly during the transport thereof.**

In particular EP-A-906 721 describes a tree shaking device comprising a housing that contains an eccentric kinematic mechanism; a rod partially housed within said housing and movable with a reciprocating motion generated by the eccentric kinematic mechanism which transforms the rotary motion of a motor into a reciprocating motion, and equipped at its free end with a hook; grip means comprising a main tubular handle partially enclosing said rod, and an auxiliary tubular handgrip secured to the housing and axially movable along a tubular body which is parallel to the rod.

From both EP-A-0933015 and US-A-4 873 820 a fruit collecting device is disclosed wherein a peripherally continuous sleeve for connecting the reciprocating shaft with the rod carrying the hook member is provided. Radially extending pins fasten the sleeve to the shaft and rod.

Under operating condition a shear stress is applied to the pins and radial holes are drilled through the sleeve and through the rods, which weaken an assembly subjected to a wearing reciprocating motion. Moreover when the sleeve is slightly worn out and does not allow any longer a tight fitting, it has to be replaced.

It is therefore an object of the present invention to provide an improved tree shaking device whose employment results more comfortable for the user and can be easily transported inside of a vehicle.

According to the invention, these objects are achieved through a tree shaking device as claimed in claim 1. Further advantageous characteristics are recited in the dependent claims.

The present invention will now be disclosed with reference to the accompanying drawings illustrating preferred but not limiting embodiments of the invention, in which:
Figure 1 is a perspective view of a shaking device according to the invention, during the use;
Figure 2 is a perspective view of the harness attached to a tree shaking device according to the invention;
Figure 3 is a perspective view illustrating with more details the front grip sleeve of a device according to the invention;
Figure 4 illustrates another embodiment of the grip sleeve;
Figure 5 is a longitudinal sectional view of a tree shaking device according to the invention;
Figure 6 is a perspective view illustrating with more details the housing and the rear grip sleeve of a device according to the invention;
Figure 7 shows a detail of the shaking hook;
Figure 8 illustrates with greater details the thrust-supporting hook of the shaker harness.

Throughout all the Figures the same reference numerals are used to indicate similar or substantially corresponding parts.

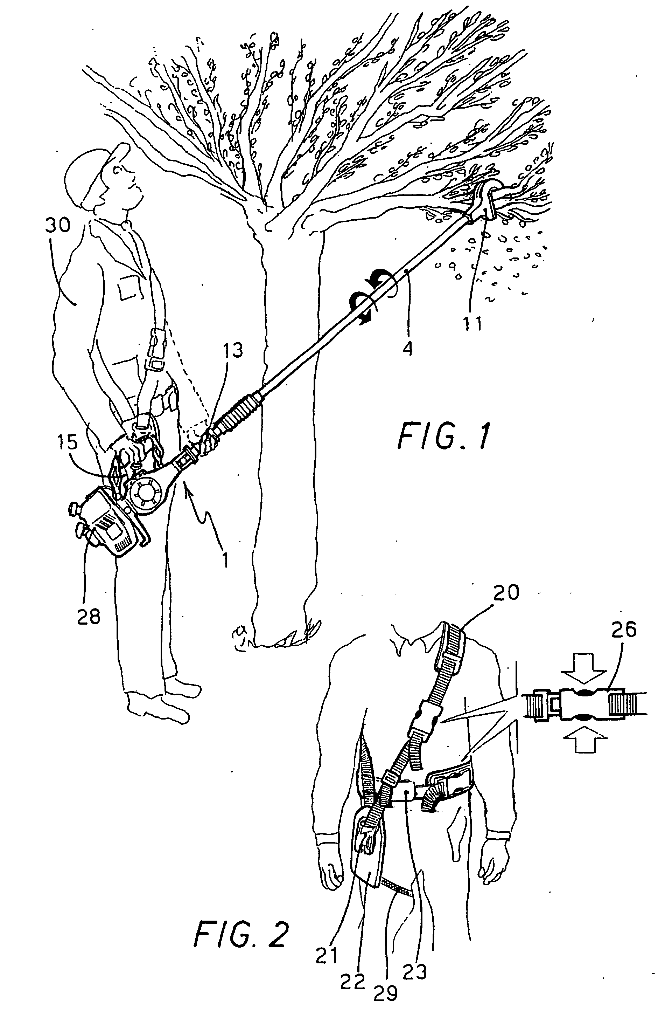

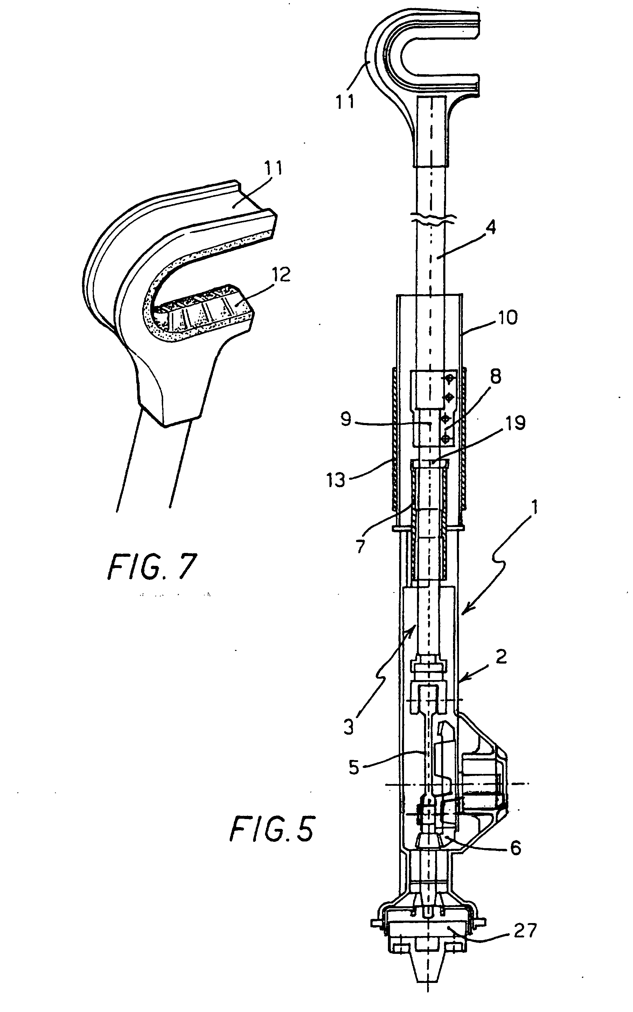

Firstly with reference to Figures 1 and 5, a shaking device 1 according to the invention comprises a body or housing 2 containing an eccentric kinematic mechanism 3, a driving rod 9 partially located within said housing and movable with a reciprocating motion imparted by said eccentric kinematic mechanism, the driving rod being connected to the mechanism through a connecting rod 5.

The rod 9 is partially housed in the housing 2 and, through a connecting sleeve or coupling 8, is connected to an end rod 4 carrying a hook 11 to engage the branches of a tree for collecting fruits therefrom.

The rod 9 is preferably of rectified steel, while the terminal rod 4 is preferably of a light alloy. The coupling 8 is provided with a longitudinal slot and four fastening screws 25 that allow to disassemble the rod 4, in particular for transporting it inside of a vehicle.

The rod 9 slides within two bronze bushings 7, placed at a certain distance from each other to increase the guiding action of the rod 9, and a sealing ring 19 is fitted at the end of the farther bronze bushing to prevent leakages of the lubricating oil contained in the box 2. Alternatively, a single bronze bushing of appropriate length can be provided for. The hook 11, illustrated with greater details in Figure 7 is equipped with a rubber protection 12 to avoid damaging the branches.

With reference in particular to Figure 5, the rod 9, driven by bronze bushings 7 reciprocates thanks to the eccentric kinematic mechanism 3 which comprises a connecting rod 5 fastened to the inner end of rod 9 and a bevel gear pair 6 receiving the rotary motion of a motor 28 through a clutch 27, and transforms it into a reciprocating motion. The bevel gear pair is equipped with a counterweight 11 to compensate the different weight of the parts.

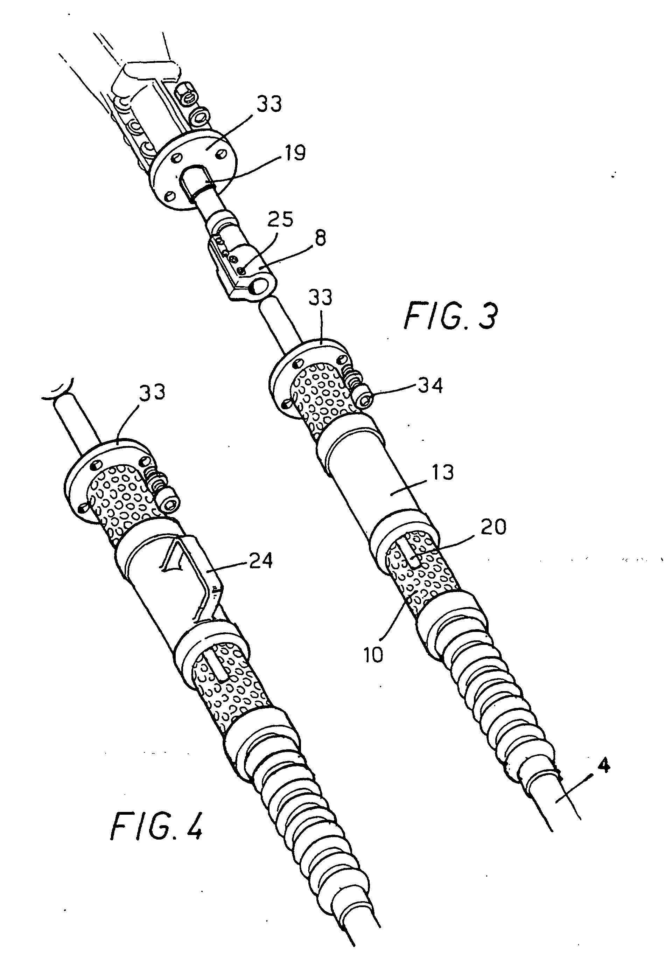

As illustrated with more details in Figures 2-4 and 6, the device 1 is carried and controlled by a user 30 through the front gripping means 13 and the rear gripping means 15.

The tree shaking device further comprises a tubular protection 10 consisting of a tubular element preferably perforated to be lighter. The protection 10 is fastened and made integral to the body 2 through flanges 33 and screws 34, and partially encloses the rods 4 and 9. The tubular element 10 is further equipped with suitable openings (slots or holes in Figure 3) that allow the passage of a wrench to screw or unscrew the screws 25, for engaging or disengaging respectively the rod 4 from the sleeve 8.

Over the tubular protection 10 a main handgrip 13 shaped as a sleeve is axially slidable. Such a sleeve is preferably made of a plastic material adapted to reduce the friction over the protection tube 10, while the outer portion gripped by the operator's hand is coated with a rubber layer.

In the shaking device according to the invention, the sleeve 13 (Figure 3) which forms the front handgrip is freely slidable (preferably in axial direction) over the protection 10, without hindrance, and therefore no reaction force is transmitted to the operator's hand by whereby a more comfortable use of machine is allowed.

According to another embodiment of the invention illustrated in Figure 4, to the sleeve 13 is fastened a handle 24 for a better gripping by the user. The sleeve 13 can be provided with a longitudinal guide on the protection 10 to prevent the handgrip 24 from rotating because of its weight.

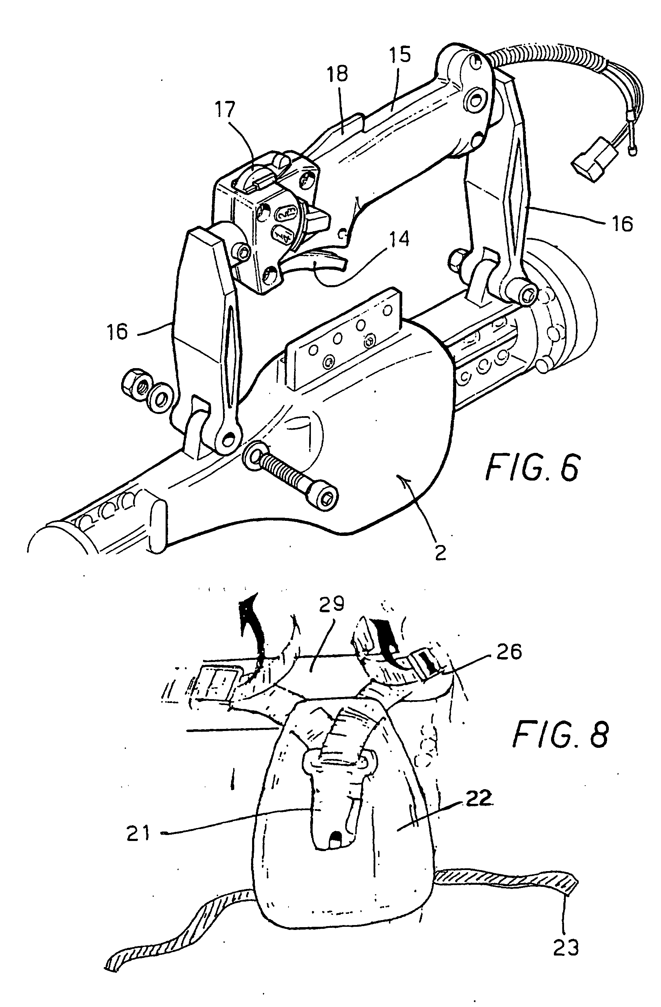

As illustrated with more details in Figure 6, in addition to the front (slidable) handgrip 13, the shaking device 1 is also equipped with a rear handgrip 15 carrying the controls for governing the motor, such as an accelerator 14, a stop switch 17 and a safety lever 18.

The rear handgrip 15 is connected elastically to the body 2 through particular dampers 16, preferably of rhomboidal shape, and has the task to partially support the machine and to direct it during the operation.

Moreover the dampers 16 allow to move transversally the handgrip 15 in order to prevent the contact with the hip of operator 30.

Supporting the weight of the shaking device is an important aspect in the use of the machine and according to the invention it is carried out by a special and ergonomic harness or sling illustrated in Figures 2 and 8. The harness according to the invention comprises a padded belt 29 which is connected to a transversal shoulder-strap 20 and discharges onto the pelvis through the hook 21 - carried by a hip protection 26 - nearly all the weight of the shaking device, thus letting the spine free from weights and vibrations. The belt and the shoulder-strap are provided with buckles of known type 26 for properly adjusting their lengths.

The hip protection 22 which carries the hook 21 is fastened to the leg through the belt 23, and has the task to protect the hip and the leg of the operator from the unavoidable rubbing of box 2 of the shaking device during its reciprocating motion.

Although the invention has been illustrated with reference to referred embodiments thereof, it is generally subjected to other applications and modifications which fall within the scope of the invention as will be evident to the skilled of the art.

## Claims

1. Tree shaking device for collecting fruits from trees, comprising:
a housing (2) containing an eccentric kinematic mechanism (3);
a rod (4) partially housed within said housing (2) and movable with a reciprocating motion imparted by said eccentric kinematic mechanism (3) which transforms the rotary motion of a motor into a reciprocating motion, said rod (4) being equipped at its free end with a hook (11), a tubular protection (10) fastened to said housing being further provided around said movable rod (4);
grip means comprising a front tubular handgrip (13) partially enclosing said movable rod (4), and a rear handgrip (15);
said movable rod (4) equipped with a hook (11) being removably connected through a sleeve (8) to one end of a driving rod (9) having the other end connected to said eccentric kinematic mechanism (3), said sleeve (8) being formed as a one-piece sleeve,
**characterised in that** said sleeve (8) is provided with a longitudinal slot and tightened to both rods (4, 9) by means of screws (25).

2. Tree shaking device as claimed in claim 1, **characterised in that** said screws (25) extend transversely to said slot.

3. Tree shaking device as claimed in claim 2, characterised said sleeve (8) is provided with four fastening screws (25) that allow to disassemble the rod 4, in particular for transporting it inside of a vehicle.

4. Tree shaking device as claimed in the preceding claims, **characterised in that** said coupling (8) comprises two sections of different sizes for joining together rods (4, 9) having different diameters.

5. Tree shaking device as claimed in the preceding claims, **characterised in that** said front handgrip (13) is slidable without hindrance over said protection (10).

6. Tree shaking device as claimed in claim 6, **characterised in that** said front handgrip (13) is freely slidable along the axial direction on said protection (10) which is fastened through flanges and screws (23) to said housing (2).

7. Tree shaking device as claimed in claims 5 or 6, **characterised in that** said front handgrip is formed of a low-friction plastic material, while the outer portion gripped by the operator's hand is coated by a rubber layer.

8. Tree shaking device as claimed in the preceding claims, **characterised in that** said movable rod (4) equipped with a hook (11) is connected through a sleeve (8) to one end of a driving rod (9) having the other end connected to said eccentric kinematic mechanism (3).

9. Tree shaking device as claimed in the preceding claims, **characterised in that** said handgrip (13) is formed as a sleeve.

## Patentansprüche

1. Baumschüttler zum Sammeln von Früchten von Bäumen, umfassend:
ein ein Exzentergetriebe (3) enthaltendes Gehäuse (2);
eine teilweise in jenem Gehäuse (2) untergebrachte Stange (4), die in einer Hinundherbewegung beweglich ist, die von jenem Exzentergetriebe (3) aufgegeben wird, das die Drehbewegung eines Motors in eine Hinundherbewegung verwandelt, wobei die Stange (4) an ihrem freien Ende mit einem Haken (11) ausgestattet ist und weiter eine an jenem Gehäuse befestigte rohrförmige Abdeckung (10) um jene bewegliche Stange (4) vorgesehen ist;
Greifelemente, die einen jene bewegliche Stange (4) teilweise
umschließenden vorderen rohrförmigen Handgriff (13) sowie einen hinteren Handgriff (15) aufweisen;
wobei jene mit einem Haken ausgerüstete bewegliche Stange (4) mit einer Muffe (8) mit einem Ende einer Antriebsstange (9) lösbar verbunden ist, deren anderes Ende mit jenem Exzentergetriebe (3) verbunden ist und jene Muffe (8) einstückig ausgebildet ist,
**dadurch gekennzeichnet, daß** jene Muffe (8) mit einem Längsschlitz versehen ist und mittels Schrauben (25) mit beiden Stangen (4, 9) fest verbunden wird.

2. Baumschüttler nach Anspruch 1,
**dadurch gekennzeichnet, daß** sich jene Schrauben (25) quer zu jenem Schlitz erstrecken.

3. Baumschüttler nach Anspruch 2,
**dadurch gekennzeichnet, daß** jene Muffe (8) mit vier Befestigungsschrauben (25) versehen ist, die die Demontage der Stange (4) erlauben, insbesondere zu ihrem Transport innerhalb eines Fahrzeugs.

4. Baumschüttler nach den vorhergehenden Ansprüchen,
**dadurch gekennzeichnet, daß** jene Kupplung (8) zwei Abschnitte unterschiedlicher Größe aufweist, um Stangen (4, 9) mit unterschiedlichem Durchmesser miteinander zu verbinden.

5. Baumschüttler nach den vorhergehenden Ansprüchen,
**dadurch gekennzeichnet, daß** jener vordere Handgriff (13) über jene Abdeckung (10) ohne Beeinträchtigung gleiten kann.

6. Baumschüttler nach Anspruch 5,
**dadurch gekennzeichnet, daß** jener vordere Handgriff (13) in Axialrichtung frei über jene Abdeckung (10) gleiten kann, die durch Flanschen und Schrauben (23) an dem Gehäuse (2) befestigt ist.

7. Baumschüttier nach Anspruch 5 oder 6,
**dadurch gekennzeichnet, daß** jener vordere Handgriff (13) aus einem reibungsarmen Kunststoff geformt ist, während der von dem Bedienungsmann umgriffene äußere Bereich mit einer Gummischicht überzogen ist.

8. Baumschüttler nach den vorhergehenden Ansprüchen,
**dadurch gekennzeichnet, daß** jene mit einem Haken (11) ausgestattete bewegliche Stange (4) durch eine Muffe (8) mit einem Ende einer Antriebsstange (9) verbunden ist, deren anderes Ende mit jenem Exzentergetriebe (3) verbunden ist.

9. Baumschüttler nach den vorhergehenden Ansprüchen,
**dadurch gekennzeichnet, daß** jener Handgriff (13) als Hülse ausgebildet ist.

## Revendications

1. Dispositif pour secouer les arbres afin de collecter les fruits de ces arbres, comprenant :
un logement (2) contenant un mécanisme cinématique excentré (3) ; une tige (4) logée partiellement à l'intérieur dudit logement (2) et pouvant se déplacer avec un mouvement de va-et-vient communiqué par ledit mécanisme cinématique excentré (3) qui transforme le mouvement rotatif d'un moteur en un mouvement de va-et-vient, ladite tige (4) étant dotée au niveau de son extrémité libre d'un crochet (11), une protection tubulaire (10) fixée audit logement étant fournie, de plus, autour de ladite tige mobile (4) ;
des moyens de saisie comprenant une poignée avant tubulaire (13) enfermant en partie ladite tige mobile (4) et une poignée arrière (15) ;
ladite tige mobile (4) munie d'un crochet (11) étant connectée de façon amovible par un manchon (8) à une extrémité d'une tige de commande (9) présentant l'autre extrémité connectée audit mécanisme cinématique excentré (3), ledit manchon (8) étant formé comme un manchon en une seule pièce,
**caractérisé en ce que** ledit manchon (8) est doté d'une fente longitudinale et serré sur les deux tiges (4, 9) au moyen de vis (25).

2. Dispositif pour secouer des arbres selon la revendication 1, **caractérisé en ce que** lesdites vis (25) s'étendent de façon transverse à ladite fente.

3. Dispositif pour secouer des arbres selon la revendication 2, **caractérisé en ce que** ledit manchon (8) est doté de quatre vis de serrage (25) qui permettent de démonter la tige (4), en particulier pour la transporter à l'intérieur d'un véhicule.

4. Dispositif pour secouer des arbres selon les revendications précédentes, **caractérisé en ce que** ledit couplage (8) comprend deux sections de dimensions différentes pour lier ensemble les tiges (4, 9) ayant des diamètres différents.

5. Dispositif pour secouer des arbres selon les revendications précédentes, **caractérisé en ce que** ladite poignée avant (13) peut coulisser sans empiéter sur ladite protection (10).

6. Dispositif pour secouer des arbres selon la revendication 5, **caractérisé en ce que** ladite poignée avant (13) peut coulisser librement le long de la direction axiale sur ladite protection (10) qui est fixée par des brides et des vis (23) audit logement (2).

7. Dispositif pour secouer des arbres selon les revendications 5 ou 6, **caractérisé en ce que** ladite poignée avant est formée d'un matériau plastique à faible frottement, tandis que la partie externe tenue par la main de l'opérateur est recouverte d'une couche de caoutchouc.

8. Dispositif pour secouer des arbres selon les revendications précédentes, **caractérisé en ce que** ladite tige mobile (4) dotée d'un crochet (11) est connectée par un manchon (8) à une extrémité d'une tige de commande (9) ayant l'autre extrémité connectée audit mécanisme cinématique excentré (3).

9. Dispositif pour secouer des arbres selon les revendications précédentes, **caractérisé en ce que** ladite poignée (13) est formée comme un manchon.
